(19) Europäisches Patentamt / European Patent Office / Office européen des brevets

(11) **EP 2 426 815 B1**

(12) **EUROPÄISCHE PATENTSCHRIFT**

(45) Veröffentlichungstag und Bekanntmachung des Hinweises auf die Patenterteilung:
**16.10.2013   Patentblatt 2013/42**

(51) Int Cl.:
**H02P 25/18** *(2006.01)*

(21) Anmeldenummer: **11177636.5**

(22) Anmeldetag: **16.08.2011**

(54) **Elektrischer Antrieb**

Electric drive

Entraînement électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2010   DE 102010045177**

(43) Veröffentlichungstag der Anmeldung:
**07.03.2012   Patentblatt 2012/10**

(73) Patentinhaber: **C. & E. Fein GmbH**
**73529 Schwäbisch Gmünd-Bargau (DE)**

(72) Erfinder: **Dietl, Lothar**
**73431 Aalen (DE)**

(74) Vertreter: **Witte, Weller & Partner**
**Postfach 10 54 62**
**70047 Stuttgart (DE)**

(56) Entgegenhaltungen:
**EP-A1- 2 104 221     DE-A1- 19 642 665**

EP 2 426 815 B1

**Beschreibung**

Die Erfindung betrifft einen elektrischen Antrieb, insbesondere für ein Elektrowerkzeug, mit einem Motor mit einem Rotor und einem feststehenden Stator, der eine Spulenanordnung aufweist, und mit einer Motorsteuerung zur Ansteuerung des Motors, wobei die Motorsteuerung dazu ausgebildet ist, die Spulenanordnung zur Erzeugung eines Erregerfeldes zu bestromen, wobei die Spulenanordnung eine Mehrzahl von Spulensträngen aufweist, und wobei jeder Spulenstrang eine Mehrzahl von Spulenabschnitten aufweist.

Ein derartiger Antrieb ist aus der DE 10 2007 040 725 A1 bekannt.

Bei dem bekannten Antrieb handelt es sich um eine elektrische Maschine mit einem permanentmagnetisch erregten Rotor und einem eine mehrphasige Wicklung tragenden Stator, welcher einerseits in einem niedrigeren Drehzahlbereich und andererseits in einem höheren Drehzahlbereich betreibbar ist. Hierzu ist vorgesehen, Teile der Statorwicklung abzuschalten oder zwischen Reihenschaltung und Parallelschaltung umzuschalten.

Dergestalt soll neben einem Normalbetrieb ein so genannter Feldschwächebetrieb in einem höheren Drehzahlbereich ermöglicht werden.

Damit können grundsätzlich bei einer elektrischen Maschine verschiedene Drehzahlbereiche realisiert werden. Es hat sich jedoch gezeigt, dass dabei der Feldschwächebetrieb mit einer erhöhten thermischen Belastung einhergehen kann. Daher können derartige Betriebsmodi häufig nur temporär, etwa als so genannte Boost-Funktion, genutzt werden.

Ferner ist es bekannt, das Drehzahlniveau eines elektrischen Antriebs, insbesondere eines EC-Motors, durch Regelung der Versorgungsspannung zu beeinflussen. Dabei kann sich grundsätzlich ein proportionaler Zusammenhang zwischen der erreichbaren Betriebsdrehzahl und der Versorgungsspannung ergeben.

Vor diesem Hintergrund liegt der Erfindung die Aufgabe zugrunde, einen elektrischen Antrieb anzugeben, der effektiv an verschiedene Einsatzbedingungen anpassbar ist, bei geringem baulichem Aufwand möglichst verschleißarm auch bei Dauerlast betrieben werden kann und sich insbesondere zur Verwendung bei einem Elektrowerkzeug eignen soll.

Die Aufgabe der Erfindung wird bei einem elektrischen Antrieb gemäß der eingangs genannten Art erfindungsgemäß dadurch gelöst, dass zumindest ein Spulenabschnitt der Mehrzahl von Spulenabschnitten jedes Spulenstrangs gegenüber den übrigen Spulenabschnitten des Spulenstrangs selektiv umpolbar ist.

Die Aufgabe der Erfindung wird auf diese Weise gelöst.

Erfindungsgemäß kann nämlich der Antrieb nunmehr in mindestens zwei Betriebsmodi gebracht werden, bei denen die Spulenabschnitte eines Spulenstrangs einerseits die gleiche Polarität und andererseits zueinander eine entgegengesetzte Polarität aufweisen können.

Somit kann auch das damit verknüpfte Erregerfeld zwei Zustände aufweisen, bei denen sich die mit den Spulenabschnitten gekoppelten Felder einerseits additiv überlagern, andererseits zumindest teilweise gegenseitig aufheben. Folglich ändert sich das Drehmoment bei gleichem Leiterstrom, also die Drehmomentkonstante. Gleichzeitig ändert sich auch die vom sich drehenden Rotor in den Spulenabschnitten induzierte Spannung. Sie kann sich je nach Polung der Spulenabschnitte entweder addieren oder subtrahieren. Im Ergebnis ändert sich die Drehzahl bei gleicher Strangspannung, also die Drehzahlkonstante.

Das Umpolen eines Spulenabschnitts bewirkt dabei eine Vertauschung des Nordpols und des Südpols, mithin der Richtung des von diesem Spulenabschnitt erzeugten Magnetfeldes.

Gemäß einer Weiterbildung der Erfindung ist die Motorsteuerung dazu ausgebildet, den Motor mit einer ersten Drehzahl- Drehmoment- Kennlinie und mit einer zweiten Drehzahl- Drehmoment- Kennlinie, die eine von der ersten Drehzahl- Drehmoment- Kennlinie verschiedene Steigung aufweist, zu betreiben, wobei vorzugsweise die Leistungsabgabe bei gleicher relativer Belastung im Wesentlichen unverändert ist.

Die relative Belastung ist hierbei als der Quotient aus der Drehzahldifferenz zwischen Leerlaufrehzahl $n_o$ und Lastdrehzahl $n_L$ einerseits und Leerlaufdrehzahl $n_0$ andererseits, also $(1 - n_L/n_0)$ oder alternativ als der Quotient aus Lastmoment $M_L$ und (bei Sättigung oder Strombegrenzung aus der Kennliniensteigung errechneten) Haltemoment $M_H$, also $M_L/M_H$ anzusehen.

Auf diese Weise kann das Verhalten des Antriebs die Funktionalität eines schaltbaren Getriebes aufweisen. Es kann sich dabei ein getriebemäßiger Zusammenhang, etwa ein Übersetzungsfaktor oder ein Untersetzungsfaktor bzw. eine Spreizung, zwischen den Drehzahlen bzw. den Drehmomenten der ersten und der zweiten Kennlinie ergeben.

Mit anderen Worten kann etwa beim Übergang von der ersten Kennlinie zur zweiten Kennlinie die Drehzahl um den Faktor steigen, um den das Drehmoment sinkt.

Gemäß einem weiteren Aspekt der Erfindung ist zumindest ein Umpolschalter vorgesehen, der dazu ausgebildet ist, die Mehrzahl von Spulenabschnitten eines Spulenstrangs zwischen einem ersten Zustand, bei dem alle Spulenabschnitte des Spulenstrangs eine gleiche Polarität aufweisen, und einem zweiten Zustand, bei dem zumindest ein Spulenabschnitt der Mehrzahl von Spulenabschnitten des Spulenstrangs eine den übrigen Spulenabschnitten des Spulenstrangs entgegengesetzte Polarität aufweist, umzuschalten.

Diese Maßnahme hat den Vorteil, dass die sich ergebenden Kupferverluste bzw. Leitungsverluste beim ersten Zustand und beim zweiten Zustand nahezu gleichbleiben.

Der zumindest eine Umpolschalter kann als mechanischer Schalter, elektromechanischer Schalter oder als elektronischer Schalter ausgebildet sein. Ein mechanischer Schalter kann etwa mit einem von einem Bediener betätigbaren Wählschalter gekoppelt sein, um den Antrieb wahlweise vom ersten in den zweiten Zustand und zurück zu schalten.

Ein elektronischer Schalter kann etwa Halbleiterschalterelemente umfassen und insbesondere mit der Motorsteuerung gekoppelt sein, um von dieser aktiviert zu werden. Somit kann das Umschalten des Antriebs zwischen dem ersten Zustand und dem zweiten Zustand oder umgekehrt basierend auf einem in der Motorsteuerung erzeugten Signal oder auf Basis eines dieser zugeführten Signals erfolgen.

In zweckmäßiger Ausgestaltung der Erfindung weist zumindest ein Spulenstrang einen ersten Spulenabschnitt und einen zweiten Spulenabschnitt auf, wobei der erste Spulenabschnitt eine erste Anzahl Windungen ($n_1$) und der zweite Spulenabschnitt eine zweite Anzahl Windungen ($n_2$) aufweist, und wobei sich bei Bestromung durch die Motorsteuerung mit den Spulenabschnitten gekoppelte Magnetfelder ergeben, die ein Summenfeld bewirken, wenn der erste Spulenabschnitt und der zweite Spulenabschnitt gleich gepolt sind, und die ein Differenzfeld bewirken, wenn der zweite Spulenabschnitt eine dem ersten Spulenabschnitt entgegengesetzte Polarität aufweist.

Gleichzeitig addieren sich die induzierten Spannungen der Spulenabschnitte, wodurch sich bei Umpolung des zweiten Spulenabschnittes die induzierte Spannung verreingert und die Leerlaufdrehzahl erhöht. Es versteht sich, dass ohne Drehrichtungsumkehr die zweite Anzahl von Windungen ($n_2$) kleiner als die erste Anzahl von Windungen ($n_1$) sein muss.

Auf diese Weise kann die Funktionalität eines Zwei-Gang-Getriebes realisiert werden.

Wenn der erste Spulenabschnitt und der zweite Spulenabschnitt gleichgepolt sind, ergibt sich eine Gesamtwindungszahl ($n$), die gleich der Summe der ersten Anzahl Windungen ($n_1$) und der zweiten Anzahl Windungen ($n_2$) ist. Die Spulenabschnitte verhalten sich folglich wie eine Einzelspule mit ($n$) Windungen.

Im umgepolten Zustand wirkt jedoch der mit dem zweiten Spulenabschnitt gekoppelte Fluss dem im ersten Spulenabschnitt erzeugten Fluss entgegen. Die damit verbundenen Magnetfelder und induzierten Spannungen heben sich in Folge zum Teil auf. In Folge verbleibt eine wirksame Anzahl Windungen ($n^*$), die der Differenz der ersten Anzahl Windungen ($n_1$) sowie der zweiten Anzahl Windungen ($n_2$) entspricht.

Aus dem Verhältnis der wirksamen Windungszahl ($n^*$) und der Gesamtwindungszahl ($n$) kann der Faktor ($i$) ermittelt werden, der ein Maß für die mit der jeweiligen Gestaltung des ersten Spulenabschnitts und des zweiten Spulenabschnitts bewirkbare "Übersetzung" der Drehzahl darstellt.

In gleicher Weise (das heißt umgekehrt proportional dazu) kann das sich dabei ergebende Moment angegeben werden.

Bei dieser Art der Feldneutralisation bleiben bei gleicher relativer Belastung sowohl die abgegebene Leistung P2 (n wird größer, M wird kleiner) als auch die Ohmschen Verluste im Wesentlichen unverändert, so dass die thermische Auslegung des Motors beide Zustände gleichermaßen berücksichtigen kann. Die Eignung zum Dauerbetrieb verbessert sich somit deutlich.

Gemäß einer Weiterbildung dieser Ausgestaltung ist der zweite Spulenabschnitt umpolbar, wobei der zweite Spulenabschnitt eine Anzahl Windungen ($n_2$) aufweist, die kleiner als die erste Anzahl Windungen ($n_1$) ist.

Auf diese Weise kann, abhängig von praktisch realisierbaren Windungszahlen, nahezu jedes beliebige "Übersetzungsverhältnis" zwischen dem ersten Zustand und dem zweiten Zustand bewirkt werden. Hierbei kann einerseits eine Übersetzung ins Schnelle, etwa beim Übergang vom ersten Zustand in den zweiten Zustand, bewirkt werden. Ebenso kann etwa der zweite Zustand einen Basiszustand darstellen, von dem aus der Antrieb in den ersten Zustand überführt werden kann. Damit könnte neben dem Basiszustand etwa ein kurzzeitiger so genannter Boost-Zustand realisiert werden, der durch ein gemäß dem Übersetzungsfaktor ($i$) vergrößertes Drehmoment bei verringerter Drehzahl charakterisiert ist.

Gemäß einer alternativen Weiterbildung der Ausgestaltung ist der zweite Spulenabschnitt umpolbar, wobei der zweite Spulenabschnitt eine Anzahl Windungen ($n_2$) aufweist, die größer als die erste Anzahl Windungen ($n_1$) ist.

Somit kann ohne wesentlich erhöhten konstruktiven Aufwand eine Drehrichtungsumkehr des Antriebs bewirkt werden. Auf diese Weise kann ein Rückwärtsgang realisiert werden.

Besonders bevorzugt ist es, wenn ausgehend von einer ersten Richtung des erzeugten Magnetfeldes im ersten Zustand, bei dem alle Spulenabschnitte eines Spulenstrangs gleich gepolt sind, entweder der erste Spulenabschnitt, der zweite Spulenabschnitt, oder aber beide Spulenabschnitte gegenüber diesem Ausgangszustand umpolbar sind.

Durch diese Maßnahme können insgesamt vier Schaltstufen realisiert werden, nämlich etwa zwei Vorwärtsgänge sowie zwei Rückwärtsgänge. Es versteht sich, dass dabei der erste Spulenabschnitt und der zweite Spulenabschnitt voneinander zumindest um einen geringen Betrag voneinander abweichende Windungszahlen aufweisen sollten.

Gemäß einer weiteren Ausgestaltung der Erfindung ist das Differenzfeld und die induzierte Gegenspannung gegenüber dem Summenfeld im Wesentlichen um einen Faktor $\left( i = \dfrac{n_1 + n_2}{n_1 - n_2} \right)$ verringert.

Somit kann das gewünschte "Übersetzungsverhältnis" einfach durch Auslegung der Spulenabschnitte bewirkt werden. Abgesehen von der Umpolung sind dabei zum Überführen des Antriebs vom ersten Zustand in den zweiten Zustand keine weiteren Eingriffe seitens der Motorsteuerung notwendig.

Gemäß einem weiteren Aspekt der Erfindung ist der Motor als permanenterregter elektronisch kommutierbarer Motor ausgebildet.

Derartige Motoren, auch als EC-Motoren bezeichnet, weisen verschiedene Vorteile wie Verschleißarmut, hohe Leistungsfähigkeit und Dynamik auf. Sie eignen sich insbesondere für Anwendungen, bei denen eine Energieversorgung mittels einer Gleichspannungsquelle bewirkt werden kann.

Alternativ können permanenterregte elektronisch kommutierbare Motoren ebenso, etwa unter Zuhilfenahme von Gleichrichtern, an einem Wechselspannungsnetz betrieben werden.

EC- Motoren weisen grundsätzlich einen permanenterregten rotierenden Teil auf, welcher als Innenläufer, etwa als Rotor, oder als Außenläufer ausgebildet sein kann.

Dem permanenterregten Teil ist ein Stator zugeordnet, der die Erregerwicklungsanordnung, also die Mehrzahl von Spulensträngen, sowie beispielsweise ein Blechpaket aufweisen kann.

Ein derartiger Antrieb benötigt keine Bürstenkontakte, so dass, abgesehen vom Verschleiß einer Motorlagerung, nicht mit wesentlichem mechanischen Verschleiß zu rechnen werden braucht. Demgemäß eignet sich der Antrieb insbesondere für Daueranwendungen.

Ein EC- Motor kann z.B. über die Motorsteuerung sinuskommutiert oder blockkommutiert werden. Dabei kann eine Pulsweitenmodulierung (PWM- Steuerung) verwendet werden.

Insbesondere ein pulsweitenmoduliertes Signal kann bei konstanter Quellspannung durch zeitliches Takten der Erregerspannung zum einen ein Spannungssignal erzeugen, dessen Mittel niedriger als die Quellspannung ist, und zum anderen einen bestimmten Spannungsverlauf, etwa einen sinusähnlichen Verlauf, approximieren.

Somit können neben dem ersten Zustand und dem zweiten Zustand, die durch gezieltes Umpolen von Spulenabschnitten der Spulenstränge bewirkt werden können, noch weitere Betriebszustände bewirkt werden. Liegt dabei etwa das Ist-Niveau einer Erregerspannung unter dem Ausgangsniveau der Quellspannung, so kann eine momentane Drehzahl-Drehmoment-Kennlinie des Motors hin zu höheren Drehzahlen verlagert werden.

Diese Maßnahme hat den Vorteil, dass sich neben den zwei "starren" Zuständen, die sich durch die Umpolung bewirken lassen, weitere Zustände besonders fein regulieren bzw. ansteuern lassen können.

Daneben ist es bevorzugt, wenn zwei oder mehr Spulenabschnitte in jedem Spulenstrang vorgesehen sind, die selektiv umpolbar sind.

Auch auf diese Weise kann eine feinere Abstufung der Charakteristik des Antriebs erfolgen.

Sind etwa drei Spulenabschnitte vorgesehen, von denen zwei Spulenabschnitte einzeln oder gemeinsam gegenüber einem Ausgangszustand umpolbar sind, so können abhängig von den vorhandenen Windungszahlen ($n_1$, $n_2$, $n_3$) ebenso insgesamt zumindest vier Zustände bewirkt werden, welche vier Drehzahl-Drehmoment-Kennlinien entsprechen, die eine voneinander verschiedene Steigung aufweisen.

Ist dabei zusätzlich noch der verbliebene dritte Spulenabschnitt selektiv umpolbar, so können insgesamt noch mehr Schaltstufen, gegebenenfalls auch mit einer Drehrichtungsänderung, bewirkt werden.

Alternativ ist es vorstellbar, anstatt einer Umpolung eines Spulenabschnitts eines Spulenstrangs eine Umschaltung von diesem Spulenabschnitt auf einen weiteren Spulenabschnitt, einen Feldschwächungsabschnitt, der eine diesem entgegengesetzte Polarität aufweist, vorzunehmen.

Auch auf diese Weise kann der Antrieb im ersten Zustand sowie im zweiten Zustand betrieben werden.

Besonders bevorzugt ist es, wenn der Antrieb bei einem Elektrowerkzeug, insbesondere einem handgeführten Elektrowerkzeug, zur Verwendung kommt, das mit einer Werkzeugspindel zum Antrieb eines Werkzeugs koppelbar ist.

Bei dem Elektrowerkzeug kann es sich etwa um ein Werkzeug zum Schrauben, Bohren, Sägen, Schneiden, Schleifen oder Polieren handeln.

Derartige Elektrowerkzeuge werden für verschiedenste Zwecke genutzt, so dass es häufig gewünscht ist, eine Abtriebsbewegung eines Werkzeugs zu beeinflussen, etwa durch Variation des Abtriebsmoments bzw. der Abtriebsdrehzahl.

Solche Variationen können etwa durch mechanische Getriebe bewerkstelligt werden. Diese können eine Mehrzahl von Schaltstufen aufweisen, welche einerseits die Abtriebsdrehzahl bzw. das Abtriebsmoment, andererseits etwa auch eine Drehrichtung beeinflussen können. Dabei ist bei mechanischen Getrieben, insbesondere bei Zahnradgetrieben, jeder Übersetzungsstufe im Allgemeinen eine konstante Übersetzung (i) zugeordnet.

Eine derartige Charakteristik kann gemäß der vorliegenden Erfindung auch direkt beim Antrieb bewirkt werden, so dass ein derartiges Getriebe ersetzt oder aber um eine erweiterte Funktionalität ergänzt werden kann.

Ein besonderer Vorteil der Erfindung liegt darin, dass die Umschaltung unter Last erfolgen kann. Der mechanische Antriebsstrang ist dabei unverändert. Die Lage des Umschaltpunktes kann frei gewählt werden. Dagegen muss bei einem mechanischen Getriebe eine Umschaltung in der Regel bei Stillstand erfolgen. Außerdem muss ein Umschaltelement mechanisch bewegt werden.

Ein erfindungsgemäß umschaltbares Elektrowerkzeug kann somit besonders leicht und einfach aufgebaut sein, dabei jedoch ein breites Anwendungsgebiet abdecken.

Gemäß einem weiteren Aspekt der Erfindung ist beim Elektrowerkzeug zumindest ein Umpolschalter vorgesehen, der mit der Motorsteuerung gekoppelt ist, um abhängig von einem Betriebszustand des Elektrowerkzeugs selektiv das Umpolen des zumindest einen Spulenabschnitts der Spulenstränge zu bewirken.

Dabei kann die Motorsteuerung dazu ausgebildet sein, eine Betriebszustandsgröße zu erfassen oder eine ihr zugeführte Betriebszustandsgröße auszuwerten, um abhängig davon das Umpolen einzuleiten.

Wird etwa festgestellt, dass aufgrund einer hohen relativen Belastung ein Drehzahleinbruch erfolgt, so könnte beispielsweise ein Spulenabschnitt eines Spulenstrangs, der eine den übrigen Spulenabschnitten des Spulenstrangs entgegengesetzte Polarität aufweist, umgepolt werden, um etwa zum ersten Zustand zurückzukehren, bei dem ein grundsätzlich höheres Abtriebsmoment bewirkt werden kann.

Wird dagegen etwa festgestellt, dass nur eine geringe relative Belastung anliegt, so kann der Antrieb etwa vom ersten Zustand in den zweiten Zustand überführt werden, indem zumindest ein Spulenabschnitt des Spulenstrangs gegenüber den übrigen Spulenabschnitten umgepolt wird. Auf diese Weise kann etwa bei einem Schrauber ein Schnellgang realisiert werden.

Somit kann die Leistungsfähigkeit des Elektrowerkzeugs insgesamt steigen, das Elektrowerkzeug kann flexibler verwendet werden.

Gemäß einer weiteren Ausgestaltung der Erfindung ist der zumindest eine Umpolschalter mit einem Wählschalter zum selektiven Umpolen des zumindest einen Spulenabschnitts der Spulenstränge gekoppelt.

Der Wählschalter kann dabei an einer beliebigen Stelle, etwa an einem Gehäuse des Elektrowerkzeugs angeordnet sein.

Somit kann ein Bediener, wie er es etwa bei einem mechanischen Getriebe gewohnt ist, eine gewünschte "Schaltstufe" manuell anwählen. Dabei unterscheiden sich die Kennlinie des Antriebs im ersten Zustand, im zweiten Zustand, sowie der nach dem Umpolen spürbare Unterschied nicht wesentlich von der Charakteristik eines mechanischen Schaltgetriebes.

Ist es vorgesehen, den zumindest einen Umpolschalter mechanisch oder im Wesentlichen elektromechanisch auszuführen, so kann dieser direkt durch den Wählschalter verkörpert sein (vergleichbar etwa mit verschiedenen Schaltstellungen eines Zündschlosses).

Soll dagegen der zumindest eine Umpolschalter als elektrischer oder elektronischer Schalter ausgebildet sein, so kann der Wählschalter zu dessen Ansteuerung mit der Motorsteuerung gekoppelt sein.

Gemäß einem weiteren Aspekt der Erfindung sind ein Getriebe zur Untersetzung oder Übersetzung eines Abtriebsmoments oder einer Abtriebsdrehzahl und eine Steuereinrichtung, die dazu ausgebildet ist, zumindest eine einen Betriebszustand charakterisierende Kenngröße zu erfassen, vorgesehen, wobei vorzugsweise die Steuereinrichtung der Motorsteuerung zugeordnet oder mit dieser gekoppelt ist.

Dabei kann das Getriebe eine konstante Übersetzung aufweisen oder aber als Schaltgetriebe mit einer Mehrzahl von Schaltstellungen ausgebildet sein.

Somit kann neben der durch das Getriebe bedingten Übersetzung durch den Antrieb eine weitere Abstufung erfolgen, so dass das Elektrowerkzeug in noch höherem Maße an bestimmte Anwendungsfälle angepasst werden kann.

Gemäß einer weiteren Ausgestaltung der Erfindung weist das Elektrowerkzeug eine Energieversorgungseinrichtung zur Bereitstellung elektrischer Energie auf, die vorzugsweise mit einer Gleichstromquelle, weiter bevorzugt mit einem Akkumulator koppelbar ist.

Insbesondere bei netzunabhängigen, vorzugsweise portablen Elektrowerkzeugen kann somit ohne wesentliches Zusatzgewicht eine Variation der Drehzahl-Drehmoment-Kennlinie bewirkt werden, die dazu beiträgt, die Leistungsfähigkeit des Elektrowerkzeugs zu verbessern.

Bei einem Elektrowerkzeug, das einen permanenterregten elektronisch kommutierbaren Elektromotor aufweist, dessen Motorsteuerung mit einer Gleichstromquelle gekoppelt ist, kann der erfindungsgemäße Antrieb besonders einfach bei einer überaus geringen Zahl zusätzlich erforderlicher Bauelemente umgesetzt werden.

Insgesamt wird mit der Erfindung ein neuartiger Antrieb bereitgestellt, der insbesondere für ein Elektrowerkzeug geeignet ist und der in hohem Maße eine "Getriebefunktionalität" nachbilden kann. Dies erfolgt bei besonders geringem Zusatzaufwand und erfordert dabei keinen wesentlichen zusätzlichen Bauraum.

Die Nachbildung der Getriebefunktionalität erfolgt bei hohem Wirkungsgrad, ferner unter Vermeidung potentiell verschleißfördernder Zustände des Antriebs, insbesondere im Hinblick auf die thermische Belastung.

Ein erfindungsgemäßer Antrieb kann grundsätzlich auch als elektrische Maschine zur Anwendung kommen, etwa bei einer Generatoranwendung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:

Fig. 1    eine schematische Ansicht eines Elektrowerkzeugs mit einem erfindungsgemäßen Antrieb;

Fig. 2    idealisierte Drehzahl-Drehmoment-Kennlinien verschiedener Antriebe;

Fig. 2a     ein Vergleich der Drehzahl-Drehmoment-Kennlinien gemäß Fig. 2 bezüglich der thermischen Belastung;

Fig. 3     ein vereinfachtes schematisches Schaltbild des Antriebs gemäß Fig. 1 im ersten Zustand;

Fig. 4     ein vereinfachtes schematisches Schaltbild des Antriebs gemäß Fig. 1 im zweiten Zustand; und

Fig. 5     verschiedene beispielhafte Kombinationen von Spulenabschnitten bei einem Spulenstrang zur Verwendung etwa bei einem Antrieb gemäß Fig. 1.

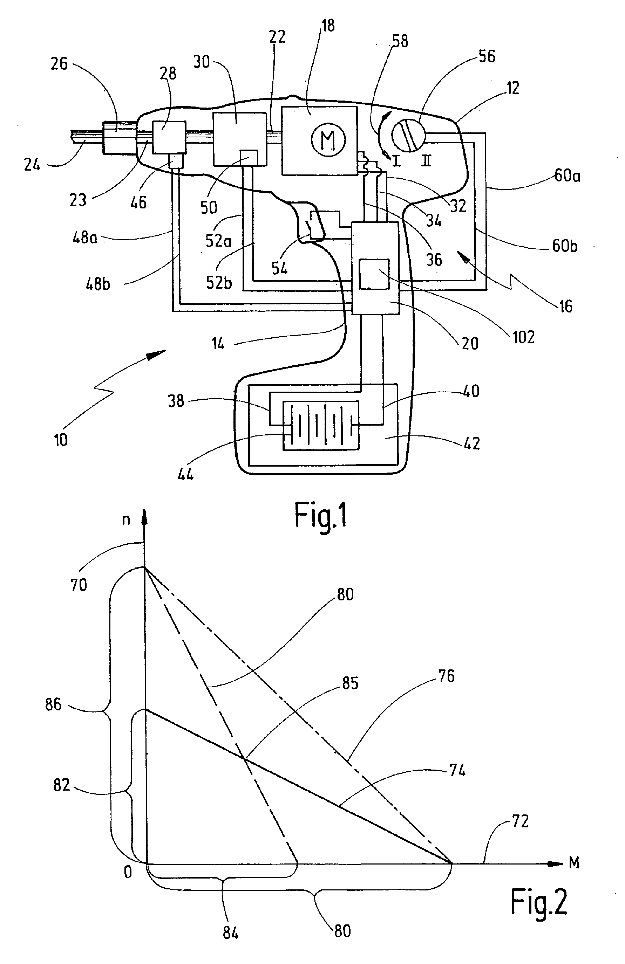

Fig. 1 zeigt eine vereinfachte schematische Darstellung eines Elektrowerkzeugs, das insgesamt mit 10 bezeichnet ist.

Beispielhaft ist das Elektrowerkzeug 10 als Werkzeug zum Bohren oder Schrauben dargestellt. Es versteht sich, dass es sich beispielsweise auch um ein Werkzeug zum Schlagbohren, Schlagschrauben, Sägen, Hämmern, Schneiden, Schleifen oder Polieren handeln kann.

Abhängig vom Verwendungszweck kann dabei die Abtriebsbewegung linear, rotatorisch, intermittierend oder aber oszillierend ausgestaltet sein. Vorliegend weist das Elektrowerkzeug 10 ein Gehäuse 12 auf, das einen Griffbereich 14 umfasst, an dem ein Bediener das Elektrowerkzeug 10 ergreifen und betätigen kann.

Im oder am Gehäuse 12 ist ein Antrieb 16 vorgesehen, der einen Motor 18 und eine Motorsteuerung 20 aufweist. Der Motor 18 dient zum Antrieb einer Motorwelle 22, die mit einer Werkzeugspindel 23 gekoppelt ist, die mit einem Werkzeug 24 (lediglich gebrochen dargestellt) zusammenwirkt.

Das Werkzeug 24 ist über eine Werkzeugaufnahme 26, etwa ein Spannfutter, an der Werkzeugspindel 23 festgelegt.

Der Werkzeugspindel 23 und der Motorwelle 22 können eine Kupplung 28 oder ein Getriebe 30 zwischengeordnet sein. Das Getriebe 30 kann etwa als Zahnradgetriebe ausgeführt sein und eine konstante Übersetzung oder aber mehrere schaltbare Übersetzungsstufen aufweisen. Die Kupplung 28 kann etwa als Rutschkupplung oder aber als Schaltkupplung ausgebildet sein und zur Überlastsicherung dienen oder aber im Rahmen einer Leerlauffunktionalität die Werkzeugspindel 23 von der Motorwelle 22 trennen. Ferner kann die Kupplung 28 beispielsweise eine Stopp-Funktion aufweisen, also gegenüber dem Gehäuse 12 festlegbar sein, um einen einfachen Werkzeugwechsel oder dergleichen zu erlauben.

Der Motor 18 ist vorzugsweise als permanenterregter elektronisch kommutierbarer Elektromotor, auch bezeichnet als EC-Motor, ausgebildet. Dabei kann die Motorsteuerung 20 die Ansteuerung des Motors 18 zur Erzeugung eines Drehfeldes bewirken. Zu diesem Zweck ist die Motorsteuerung 20 über Erregerleitungen 32, 34, 36 mit dem Motor 18 gekoppelt.

Die Motorsteuerung 20 ist ferner über Versorgungsleitungen 38, 40 mit einer Energieversorgungseinrichtung 42 koppelbar, welche in Fig. 1 beispielhaft einen Akkumulator 44 aufweist.

Der Akkumulator 44 dient dabei als Gleichstromquelle, die Quellspannung wird von der Motorsteuerung 20 in eine Erregerspannung überführt, welche den Motor 18 über die Erregerleitungen 32, 34, 36 beaufschlägt. Jede der Erregerleitungen 32, 34, 36 kann dabei etwa einer Phase U, V, W zugeordnet sein.

Alternativ kann das Elektrowerkzeug 10 auch mit einer stationären Spannungsquelle verbunden sein, etwa einem Leitungsnetz. Zur Überführung einer Wechselspannung in eine Gleichspannung kann dabei eine Gleichrichteranordnung vorgesehen sein.

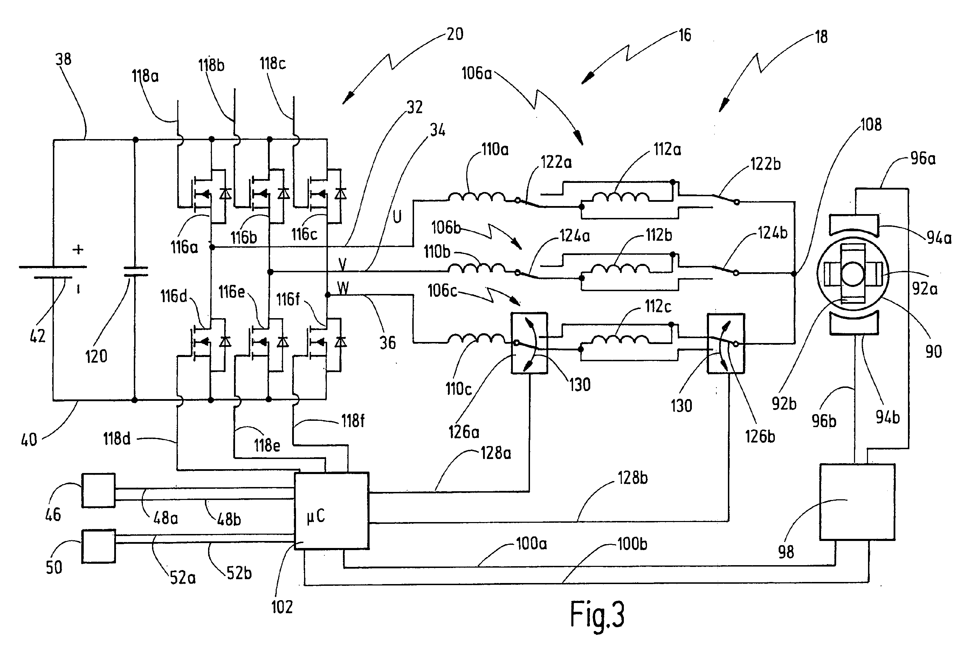

In Fig. 1 ist die Motorsteuerung 20 ferner beispielhaft mit Sensoren 46, 50 gekoppelt, dabei erfolgt eine Signalübertragung über Sensorleitungen 48a, 48b bzw. 52a, 52b. Die Sensoren 46, 50 können dazu ausgebildet sein, eine Betriebszustandsgröße zur Beschreibung eines Betriebszustands des Elektrowerkzeugs 10 zu erfassen und an die Motorsteuerung 20 oder eine bei dieser vorgesehene oder mit dieser gekoppelte Steuereinrichtung 102 (vgl. Fig. 3) zu übermitteln.

Die zu erfassende Betriebszustandsgröße kann dabei grundsätzlich eine Drehzahl oder ein Drehmoment, etwa am Antrieb oder am Abtrieb, ein Schaltzustand eines Schalters, eine Temperatur, etwa des Getriebes 30 oder des Akkumulators 44, oder aber ein Wert sein, der eine an den Erregerleitungen 32, 34, 36 anliegende Spannung oder einen durch diese fließenden Strom verkörpert.

Der Sensor 46 kann etwa dazu ausgebildet sein, einen Schaltzustand der Kupplung 28 zu erfassen. Alternativ könnte der Sensor 46 dazu ausgebildet sein, etwa als Verschleiß- oder Lastindikator eine Temperatur bei der Kupplung 28 zu erfassen.

Ebenso kann der Sensor 50 dazu vorgesehen sein, einen Schaltzustand, etwa eine momentan gewählte Schaltstellung, des Getriebes 30 oder aber eine eine Momentanbelastung kennzeichnende Temperatur zu erfassen.

Beim Griffbereich 14 des Elektrowerkzeugs 10 ist ferner ein Betätigungsschalter 54 vorgesehen, über den der Bediener das Elektrowerkzeug 10 wahlweise aktivieren oder aber deaktivieren kann. Der Betätigungsschalter 54 ist ebenso mit der Motorsteuerung 20 gekoppelt.

Ferner ist am Gehäuse 12 des Elektrowerkzeugs 10 ein Wählschalter 56 vorgesehen, der über Wählschalterleitungen 60a, 60b mit der Motorsteuerung 20 gekoppelt ist. Der Wählschalter 56 kann, wie durch einen mit 58 bezeichneten Pfeil angedeutet, zwischen einer ersten Position und einer zweiten Position hin und her geschaltet werden. Über den Wählschalter 56 kann der Bediener den Antrieb 16 des Elektrowerkzeugs 10 etwa zwischen einem ersten Zustand mit einer ersten Drehzahl-Drehmoment-Kennlinie und einem zweiten Zustand mit einer zweiten Drehzahl-Drehmoment-Kennlinie umschalten, vgl. auch Fig. 3.

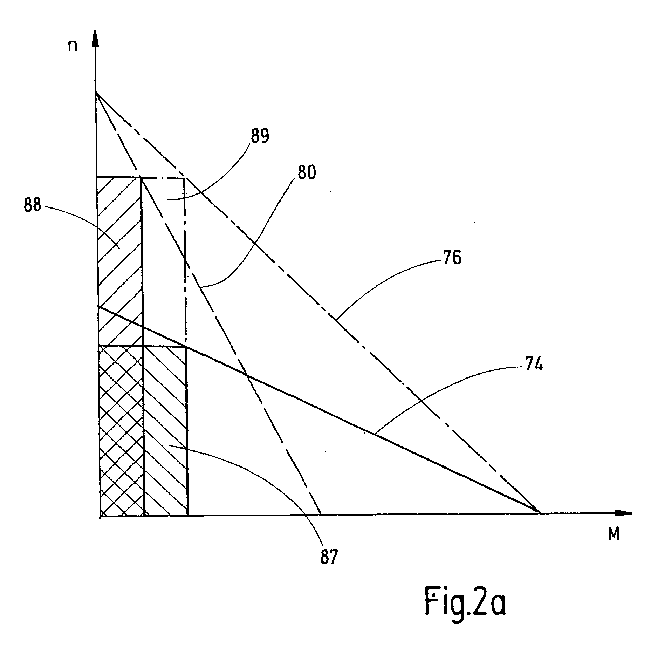

Anhand der Figuren 2 bis 4 wird nachfolgend die Funktion des erfindungsgemäßen Antriebs 16 näher erläutert.

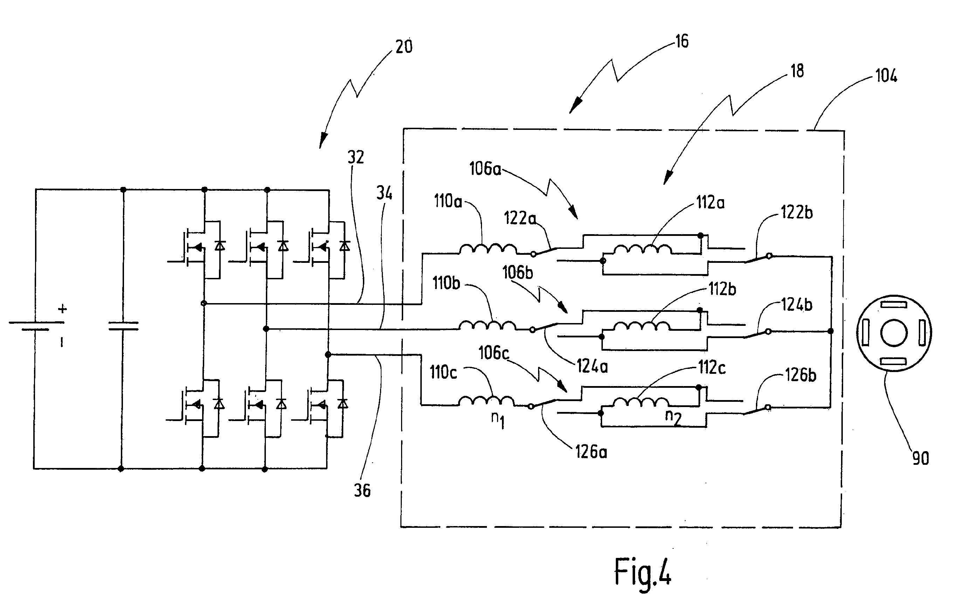

Fig. 3 und 4 zeigen ein einfaches schematisches Schaltbild etwa eines Antriebs 16 zur Verwendung beim Elektrowerkzeug 10 gemäß Fig. 1.

In Fig. 2 sind beispielhafte Drehzahl-Drehmoment-Kennlinien eines Elektromotors dargestellt. Auf der Ordinate 70 ist dabei die Drehzahl n aufgetragen. Die Abszisse 72 zeigt dagegen Werte für das Drehmoment M.

Mit 74, 76, 80 sind verschiedene Drehzahl-Drehmoment- Verläufe idealisiert aufgetragen. Die Drehzahl- Drehmoment- Kennlinie 74 stellt beispielhaft einen n (M)- Verlauf eines typischen EC- Motors dar. Der erfindungsgemäße Antrieb kann sowohl in einem ersten Zustand, etwa mit einer Drehzahl- Drehmoment- Kennlinie 74, als auch in einem zweiten Zustand, etwa mit einer Drehzahl- Drehmoment- Kennlinie 80, betrieben werden. Dabei wird eine einem Schaltgetriebe ähnliche Funktionalität bewirkt.

Im ersten Zustand ist die Kennlinie 74 durch ein Haltemoment 80 und eine Leerlaufdrehzahl 82 charakterisiert. Demgegenüber kann der Antrieb 16 im zweiten Zustand so betrieben werden, als wäre ein Übersetzungsgetriebe mit einem Übersetzungsfaktor i = 2 zwischengeschaltet. Die den zweiten Zustand verkörpernde Kennlinie 80 ist durch eine Leerlaufdrehzahl 86 sowie ein Haltemoment 84 charakterisiert. Es ist dabei ohne Weiteres ersichtlich, dass im gewählten Beispiel die Leerlaufdrehzahl 86 beim dargestellten Beispiel im zweiten Zustand etwa das Doppelte der Leerlaufdrehzahl 82 im ersten Zustand beträgt. Im Gegensatz dazu beträgt das Haltemoment 84 im zweiten Zustand etwa die Hälfte des Haltemoments 80 im ersten Zustand. Idealisiert betrachtet ist dabei der Quotient des Haltemoments 80 und des Haltemoments 84 umgekehrt proportional zum Quotienten der Leerlaufdrehzahl 82 und der Leerlaufdrehzahl 86.

Mit Ziffer 85 ist der Schnittpunkt der beiden Kennlinien 74, 80 angegeben. Erfolgt an diesem Punkt eine Umschaltung zwischen den beiden Kennlinien, so ist dies für den Benutzer völlig unmerklich. Ausgehend von dort aus kann dann entweder auf der Kennlinie 74 oder 80 weiter gefahren werden.

Zum Vergleich ist mit 76 eine weitere Drehzahl-Drehmoment-Kennlinie angedeutet, die gemäß dem Stand der Technik etwa gemäß der DE 10 2007 040 725 A1 ausgehend vom ersten Zustand, durch die Kennlinie 74 charakterisiert, bewirkt werden kann.

Dabei kann der Übergang von der Kennlinie 74 auf die Kennlinie 76 z.B. durch das Abschalten von Teilspulen realisiert werden. Die sich ergebende Kennlinie 76 kann nicht, wie etwa die Kennlinie 80, unter Beibehaltung der umgekehrten Proportionalität der jeweiligen Quotienten aus Leerlaufdrehzahl und Haltemoment abgeleitet werden.

Ein Betrieb etwa gemäß der Kennlinie 76 kann dabei grundsätzlich zu Überlastungen einzelner Bereiche des Antriebs führen. Umgekehrt würde eine Auslegung des Antriebs 16 auf die Kennlinie 76 zu einem erhöhten konstruktiven Aufwand führen, der Antrieb wäre jedoch dabei für einen Betrieb etwa entlang der Kennlinie 74 deutlich überdimensioniert.

Dies sei im Folgenden an Hand von Fig. 2a näher erläutert. Fig. 2a zeigt die Kennlinien 74 und 80 gemäß Fig. 2, die erfindungsgemäß durch Umschalten realisierbar sind, sowie zum Vergleich die Kennlinie 76 gemäß dem Stand der Technik, die durch Abschalten von Teilspulen realisierbar ist. Die beispielhaft bei einer relativen Belastung von 80 % abgegebene Leistung, das Produkt n x M, ist bei der Kennlinie 74 durch die erste schraffierte Fläche 87 dargestellt. Sie entspricht der abgegebenen Leistung bei relativer Belastung von 80 % bei der durch Umschaltung erfindungsgemäß erhaltenen Kennlinie 80, vgl. zweite schraffierte Fläche 88. Unter Vernachlässigung von Eisen- und Reibungsverlusten, also unter ausschließlicher Berücksichtigung von Kupferverlusten (Ohmschen Verlusten) ändert sich beim erfindungsgemäßen Motor der Wärmeeintrag in den Motor durch Umschaltung nicht, sofern die relative Belastung gleich bleibt.

Dagegen ergibt sich bei der Kennlinie 76 gemäß dem Stand der Technik die doppelte Leistung, vgl. strichpunktiert umrissene Fläche. Dies geht einher mit einer Verdopplung der thermischen Belastung, da der Strom auf den doppelten Wert ansteigt. Folglich müsste ein Motor, der gemäß dem Stand der Technik auf eine Kennlinie 76 etwa durch Abschaltung von Teilspulen umschaltbar ist, für die doppelte thermische Belastung ausgelegt werden, was mit einer entsprechenden Gewichts- und Größenzunahme verbunden wäre. Dies zeigt deutlich, dass eine Umschaltung gemäß dem Stand der Technik, wie sie etwa aus der DE 10 2007 040 725 A1 bekannt ist, wenig Sinn macht.

Im Fortgang wird anhand Fig. 3 eine schematische Darstellung eines erfindungsgemäßen Antriebs 16 erläutert.

Der Antrieb 16 weist dabei vorrangig einen Motorteil, den Motor 18, sowie einen Steuerteil, die Motorsteuerung 20, auf.

Dem Motor 18 ist ein Rotor 90 zugeordnet, welcher vorliegend beispielhaft zwei Polpaare 92a, 92b aufweist. Es versteht sich, dass der Rotor 90 ebenso auch lediglich etwa ein Polpaar oder aber eine Mehrzahl von Polpaaren aufweisen kann. Der Rotor 90 ist durch entsprechende Magnetwerkstoffe permanent magnetisiert.

Zur Ansteuerung des Motors 16 ist es erforderlich, eine Lage bzw. Orientierung des Rotors 90 relativ zu einem Stator 104 (in Fig. 4 schematisch angedeutet) zu erfassen. Dies kann etwa über Lagesensoren 94a, 94b erfolgen, die beispielsweise als Hallsensoren ausgebildet sein können. Vorliegend sind zwei Lagesensoren 94a, 94b dargestellt, grundsätzlich können auch ein Lagesensor 94 oder eine Mehrzahl von Lagesensoren 94 vorgesehen sein. Die Lagesensoren 94a, 94b sind über Sensorleitungen 96a, 96b mit einer Lageerfassungseinrichtung 98 verbunden.

Die Lagesensoren 94a, 94b können dazu ausgebildet sein, das Magnetfeld des umlaufenden Rotors 90 oder aber einer gemeinsam mit diesem rotierenden Sensorscheibe (nicht dargestellt) zu erfassen und der Lageerfassungseinrichtung 98 ein Signal zur Auswertung zuzuführen.

Alternativ kann die Erfassung der Lage des Rotors 90 auch sensorlos erfolgen, etwa durch Erfassung und Auswertung einer in gerade nicht bestromten Spulensträngen des Stators 104 induzierten Spannung.

Die Lageerfassungseinrichtung 98 ist über Leitungen 100a, 100b mit der Steuereinrichtung 102 gekoppelt, könnte aber ebenso auch gemeinsam mit dieser integriert als Teil der Motorsteuerung 20 ausgeführt sein.

Die Steuereinrichtung 102 kann einen Prozessor oder eine Logikeinheit umfassen, um eine Mehrzahl von Spulensträngen 106a, 106b, 106c zur Erzeugung eines Erregerfeldes anzusteuern.

Die Spulenstränge 106a, 106b, 106c sind dem Stator 104 zugeordnet, der daneben etwa noch ein Blechpaket (nicht dargestellt) aufweisen kann.

Vorliegend sind die Spulenstränge 106a, 106b, 106c beispielhaft über einen Sternpunkt 108 miteinander verschaltet. Alternativ ist eine Dreieckschaltung der Spulenstränge 106a, 106b, 106c ohne Weiteres denkbar.

Erfindungsgemäß weisen die Spulenstränge 106a, 106b, 106c eine Mehrzahl von Spulenabschnitten 110a, 112a, 110b, 112b, 110c, 112c auf, von denen zumindest ein Spulenabschnitt 112a, 112b, 112c gegenüber den übrigen Spulenabschnitten 110a, 110b, 110c umpolbar ist.

Es versteht sich, dass die in den Figuren 3 und 4 gezeigte Darstellung der Spulenabschnitte 110, 112 lediglich symbolhaft ist. Insbesondere kann angenommen werden, dass sich die Windungszahlen der Spulen 110 von den Windungszahlen der Spulen 112 unterscheiden.

Die Spulenstränge 106a, 106b, 106c sind von der Motorsteuerung 20 über die Erregerleitungen 32, 34, 36 ansteuerbar. Der Spulenstrang 106a verkörpert dabei eine Phase U, der Spulenstrang 106b eine Phase V und der Spulenstrang 106c eine Phase W.

Es versteht sich, dass der Motor 18 grundsätzlich statt über ein DreiPhasen-Wechselfeld auch über ein Wechselfeld mit mehr oder weniger Phasen angesteuert werden kann. Dabei können auch mehr oder weniger als drei Spulenstränge vorgesehen sein, die darüber hinaus etwa zum Teil auch aus parallel geschalteten Teilsträngen gebildet sein können.

Die Motorsteuerung 20 weist ferner eine Anzahl Schaltglieder 116a, 116b, 116c, 116d, 116e, 116f auf, die von der Steuereinrichtung 102 über Schaltleitungen 118a, 118b, 118c, 118d, 118e, 118f zur Überführung der an der Energieversorgungseinrichtung 42 anliegenden Gleichspannung in ein Erregerdrehfeld ansteuerbar sind.

Die Schaltglieder 116 können dabei als elektronische Schaltglieder diskret oder integriert ausgeführt sein. Es kann sich dabei etwa um Transistoren, insbesondere um Feldeffekttransistoren, handeln. Den Transistoren können dabei Sperrdioden zugeordnet sein, um einen Rückfluss oder Bypassfluss zu unterbinden.

Der Motorsteuerung 20 kann ferner ein Dämpfungsglied 120, etwa eine Kapazität, zur Signaldämpfung bzw. Signalglättung zugeordnet sein.

Beispielhaft wird anhand der Phase W das Umpolen des zweiten Spulenabschnittes 112c erläutert.

Gemäß der Darstellung in Fig. 3 weist der Spulenstrang 106c, der über die Erregerleitung 36 ansteuerbar ist, den ersten Spulenabschnitt 110c sowie den zweiten Spulenabschnitt 112c auf. Die Spulenabschnitte 110c und 112c sind gleichsinnig orientiert, so dass sich bei einer Ansteuerung in beiden ein ebenso gleich orientiertes Magnetfeld ergibt, das sich insgesamt zu einem Summenfeld ergänzt. Zum Umpolen des zweiten Spulenabschnitts 112c sind Umpolschalter 126a, 126b vorgesehen. Diese können, wie durch mit 130 bezeichnete Pfeile angedeutet, derart geschaltet werden, dass der zweite Spulenabschnitt 112c gegenüber dem ersten Spulenabschnitt 110c in einer umgepolten Orientierung vorliegt, vgl. hierzu Fig. 4.

In dieser umgepolten Stellung, einem zweiten Zustand, sind die bei Erregung in den Spulenabschnitten 110c, 112c erzeugten Magnetfelder einander entgegengerichtet und heben sich, zumindest ihrem Betrage nach, auf. Das verbliebene, geschwächte Feld kann nun dazu beitragen, dem Antrieb 16 eine den zweiten Zustand kennzeichnende Charakteristik, etwa gemäß der Kennlinie 80 in Fig. 2, zu verleihen.

Beispielhaft sind der Umpolschalter 126a über eine Steuerleitung 128a sowie der Umpolschalter 126b über eine Steuerleitung 128b mit der Steuereinrichtung 102 gekoppelt, um von dieser selektiv angesteuert zu werden. Die Steuereinrichtung 102 kann, etwa nach dem Auswerten von von den Sensoren 46, 50 bereitgestellten Signalen, den Antrieb 16 selektiv vom ersten Zustand in den zweiten Zustand überführen.

In den übrigen Spulensträngen 106a, 106b sind ebenso Umpolschalter 122a, 122b, 124a, 124b vorgesehen, deren Verbindung mit der Steuereinrichtung 102 jedoch aus Gründen der Übersichtlichkeit nicht dargestellt ist.

Nach dem Überführen des Antriebs 16 vom ersten Zustand, etwa gemäß Fig. 3, in den zweiten Zustand, etwa gemäß Fig. 4, ergibt sich eine Charakteristik, etwa vergleichbar einem Antrieb, der mit einem konventionellen Getriebe gekoppelt ist, bei dem die Schaltstufe gewechselt wurde.

Da das Umpolen der Spulenabschnitte 112a, 112b, 112c in den Spulensträngen 106a, 106b, 106c beispielsweise im Vergleich zum Schalten eines mechanischen Getriebes vollständig oder nahezu vollständig frei von mechanischen Eingriffen erfolgt, kann dieser Vorgang auch im Betrieb, etwa bei rotierendem Rotor 90, erfolgen. Eine Umpolung kann ebenso auch im Stillstand erfolgen, dabei können insbesondere mechanischen Schaltgetrieben anhaftende Nachteile, wie etwa Zahnauf- Zahn- Stellungen, die ein Einrücken beim Schalten verhindern, vermieden werden.

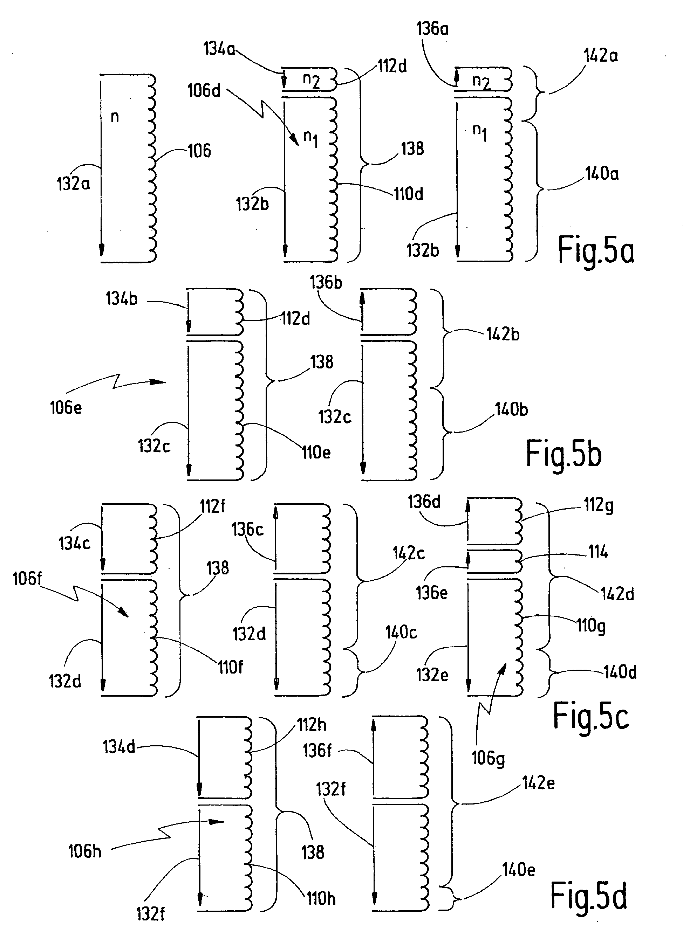

Anhand der Figuren 5a bis 5d werden verschiedene mögliche Konfigurationen von Spulensträngen und sich beim Umpolen ergebende Zustände erläutert.

In den Figuren 5a bis 5d sind Spulenstränge 106 angedeutet, welche beispielhaft jeweils sechzehn Gesamtwindungen n aufweisen. Es versteht sich, dass in der praktischen Anwendung ohne Weiteres andere, sowohl höhere als auch niedrigere, Windungszahlen zur Anwendung kommen können. Es muss nur eine minimale Windungszahl von mindestens 3 im ersten Spulenabschnitt (n1) eingehalten werden, wenn keine Drehrichtungsumkehr erwünscht ist.

In Fig. 5a ist ein Spulenstrang 106 in einem Grundzustand angedeutet, der aus lediglich einem Spulenabschnitt besteht. Der Spulenstrang 106 weist dabei eine durch einen mit 132a bezeichneten Pfeil angedeutete Polorientierung auf.

Demgegenüber weist ein weiterer Spulenstrang 106d einen ersten Spulenabschnitt 110d und einen zweiten Spulenabschnitt 112d auf. Beispielhaft umfasst dabei der erste Spulenabschnitt 110d vierzehn Windungen, $n_1 = 14$, und der zweite Spulenabschnitt 112d zwei Windungen, $n_2 = 2$. Im ersten Zustand liegen dabei zwei gleichgerichtete Polorientierungen 132b, 134a vor. Es ergibt sich bei einer Ansteuerung des Spulenstrangs 106d ein mit 138 angedeutetes Summenfeld. Dem Betrage nach entspricht dabei das Summenfeld 138 dem im Spulenstrang 106 erzeugten Magnetfeld.

Demgegenüber weist im zweiten Zustand der zweite Spulenabschnitt 112d eine entgegengerichtete Polorientierung 136a auf. Die Polorientierung des ersten Spulenabschnitts 132b ist dabei unverändert. Dabei ist das im zweiten Spulenabschnitt 112d erzeugte Magnetfeld dem im ersten Spulenabschnitt 110d erzeugten Magnetfeld entgegengerichtet. In Folge ergibt sich ein Differenzfeld 140a, wogegen ein Teil des ursprünglichen Summenfeldes 138 durch eine Feldaufhebung 142a ausgelöscht ist. Die wirksame Windungszahl beträgt zwölf, $n^* = n_1 - n_2 = 12$.

Insgesamt kann dabei eine Feldschwächung bzw. "Übersetzung" von i = 1,33 bewirkt werden.

In Fig. 5b ist ein Spulenstrang 106e dargestellt, bei dem ein erster Spulenabschnitt 110e nunmehr zwölf Windungen, $n_1 = 12$, und ein zweiter Spulenabschnitt 112d vier Windungen, $n_2 = 4$, aufweisen. Im ersten Zustand, wenn der erste Spulenabschnitt 110e und der zweite Spulenabschnitt 112d gleichgerichtete Polorientierungen 132c, 134b aufweisen, ergibt sich ein gegenüber Fig. 5a unverändertes Summenfeld 138. Im zweiten Zustand hingegen bewirkt eine entgegengerichtete Polorientierung 136b des zweiten Spulenabschnitts 112d eine deutliche Schwächung des Summenfeldes 138, so dass sich ein Differenzfeld 140b ergibt, das dem Betrage nach etwa halb so groß wie das Summenfeld 138 ist. Dementsprechend liegt eine Feldaufhebung 142b vor, die etwa gleich dem Differenzfeld 140b ist. Insgesamt kann sich dabei eine Feldschwächung bzw. "Übersetzung" von i = 2 ergeben.

In Fig. 4 ist zunächst in analoger Weise ein Spulenstrang 106f dargestellt, bei dem der erste Spulenabschnitt 110f nunmehr zehn Windungen, $n_2 = 10$, und der zweite Spulenabschnitt 112f sechs Windungen, $n_2 = 6$, umfassen. Es ergibt sich in bekannter Weise ein nunmehr deutlich reduziertes Differenzfeld 140c. Der Betrag der sich ergebenden Feldaufhebung 142c vergrößert sich entsprechend auf i=4.

Alternativ ist in Fig. 5c angedeutet, wie ein derartiger Zustand auch mittels eines Spulenstrangs 106g bewirkt werden kann, der neben einem ersten Spulenabschnitt 110g einen zweiten Spulenabschnitt 112g sowie einen dritten Spulenabschnitt 114 aufweist. Der erste Spulenabschnitt 110g weist eine Polorientierung 132e auf. Die Spulenabschnitte 112g und 114 weisen dieser entgegengerichtete Polorientierungen 136d, 136e auf, welche letztlich zu einer der Polorientierung 136c entsprechenden Feldschwächung führen. Das sich ergebende Differenzfeld 140d entspricht dem Differenzfeld 140c.

Es ergibt sich ohne Weiteres, dass etwa über selektives Umpolen lediglich des zweiten Spulenabschnitts 112g oder aber des dritten Spulenabschnitts 114 andere Ausprägungen der Feldschwächung bewirkt werden können. Auf diese Weise können weitere Betriebszustände des Antriebs 16 realisiert werden.

Schließlich zeigt Fig. 5d einen Spulenstrang 106h, bei dem ein erster Spulenabschnitt 110h neun Windungen, $n_1 = 9$, und ein zweiter Spulenabschnitt 112h sieben Windungen, $n_2 = 7$, umfassen. Demgemäß ergibt sich nach der Umpolung des zweiten Spulenabschnitts 112h ein deutlich verringertes verbliebenes Differenzfeld 140e. In diesem Beispiel vergrößert sich die Feldschwächung bzw. "Übersetzung" auf i=8.

Es versteht sich, dass durch weitere Reduktion der Anzahl Windungen des ersten Spulenabschnitts bzw. durch weitere Erhöhung der Anzahl Windungen des zweiten Spulenabschnitts dann eine Bewegungsumkehr ermöglicht wird, wenn die Anzahl Windungen des zweiten Spulenabschnitts die Anzahl Windungen des ersten Spulenabschnitts übersteigt.

Im Rahmen der Erfindung wird ein Antrieb bereitgestellt, der insbesondere für ein Elektrowerkzeug geeignet ist und der bei geringem konstruktiven Aufwand und einfachem Aufbau eine wirksame Veränderung der Betriebscharakteristik des Antriebs ermöglicht und insbesondere eine einem Schaltgetriebe ähnliche Funktionalität bewirken kann. Es können dabei eine Mehrzahl von Betriebszuständen realisiert werden, bei denen im Wesentlichen vergleichbare thermische Belastungen, insbesondere keine thermischen Spitzenlasten, beim Antrieb vorliegen.

**Patentansprüche**

1. Elektrischer Antrieb, insbesondere für ein Elektrowerkzeug (10), mit einem Motor (18) mit einem Rotor (90) und einem feststehenden Stator (104), der eine Spulenanordnung aufweist, und mit einer Motorsteuerung (20) zur Ansteuerung des Motors (18), wobei die Motorsteuerung (20) dazu ausgebildet ist, die Spulenanordnung zur Erzeugung eines Erregerfeldes zu bestromen, wobei die Spulenanordnung eine Mehrzahl von Spulensträngen (106) aufweist, und wobei jeder Spulenstrang (106) eine Mehrzahl von Spulenabschnitten (110, 112, 114) aufweist, **dadurch gekennzeichnet, dass** zumindest ein Spulenabschnitt (112, 114) der Mehrzahl von Spulenabschnitten (110, 112, 114) jedes Spulenstrangs (106) gegenüber den übrigen Spulenabschnitten (110) des Spulenstrangs (106) selektiv umpolbar ist.

2. Antrieb (16) nach Anspruch 1, **dadurch gekennzeichnet, dass** die Motorsteuerung (20) dazu ausgebildet ist, den Motor (18) mit einer ersten Drehzahl- Drehmoment- Kennlinie und mit einer zweiten Drehzahl- Drehmoment- Kennlinie, die eine von der ersten Drehzahl- Drehmoment- Kennlinie verschiedene Steigung aufweist, zu betreiben, wobei vorzugsweise die Leistungsabgabe bei gleicher relativer Belastung im Wesentlichen unverändert ist.

3. Antrieb (16) nach Anspruch 1 oder 2, **gekennzeichnet durch** zumindest einen Umpolschalter (124, 126), der dazu ausgebildet ist, die Mehrzahl von Spulenabschnitten (110, 112, 114) eines Spulenstrangs (106) zwischen einem ersten Zustand, bei dem alle Spulenabschnitte (110, 112, 114) des Spulenstrangs (106) eine gleiche Polarität aufweisen, und einem zweiten Zustand, bei dem zumindest ein Spulenabschnitt (112, 114) der Mehrzahl von Spulenabschnitten (110, 112, 114) des Spulenstrangs (106) eine den übrigen Spulenabschnitten (110) des Spulenstrangs (106) entgegengesetzte Polarität aufweist, umzuschalten.

4. Antrieb (16) nach einem der vorhergehenden Ansprüche, **dadurch gekennzeichnet, dass** zumindest ein Spulenstrang (106) einen ersten Spulenabschnitt (110) und zumindest einen zweiten Spulenabschnitt (112) aufweist, dass der erste Spulenabschnitt (110) eine erste Anzahl Windungen ($n_1$) und der zweite Spulenabschnitt (112) eine zweite Anzahl Windungen ($n_2$) aufweist, und dass sich bei Bestromung durch die Motorsteuerung (20) mit den Spulenabschnitten (110, 112) gekoppelte Magnetfelder ergeben, die ein Summenfeld (138) bewirken, wenn der erste Spulenabschnitt (110) und der zweite Spulenabschnitt (112) gleich gepolt sind, und die ein Differenzfeld (140) bewirken, wenn der zweite Spulenabschnitt (112) eine dem ersten Spulenabschnitt (110) entgegengesetzte Polarität aufweist.

5. Antrieb (16) nach Anspruch 4, **dadurch gekennzeichnet, dass** der zweite Spulenabschnitt (112) umpolbar ist, und dass der zweite Spulenabschnitt (112) eine zweite Anzahl Windungen ($n_2$) aufweist, die kleiner als die erste Anzahl Windungen ($n_1$) ist.

6. Antrieb (16) nach Anspruch 4, **dadurch gekennzeichnet, dass** der zweite Spulenabschnitt (112) umpolbar ist, und dass der zweite Spulenabschnitt (112) eine zweite Anzahl Windungen ($n_2$) aufweist, die größer als die erste Anzahl Windungen ($n_1$) ist.

7. Antrieb (16) nach einem der Ansprüche 4 bis 6, **dadurch gekennzeichnet, dass** das Differenzfeld (140) gegenüber dem Summenfeld (138), sowie die zugehörigen induzierten Spannungen, im Wesentlichen um einen Faktor ($i = n_1 + n_2 / n_1 - n_2$) geschwächt ist.

8. Antrieb (16) nach einem der vorhergehenden Ansprüche, **dadurch gekennzeichnet, dass** der Motor (18) als permanenterregter elektronisch kommutierbarer Motor ausgebildet ist.

9. Elektrowerkzeug, **gekennzeichnet durch** einen Antrieb (16) nach einem der vorhergehenden Ansprüche, der mit einer Werkzeugspindel (23) zum Antrieb eines Werkzeugs (24) koppelbar ist.

10. Elektrowerkzeug (10) nach Anspruch 9, **dadurch gekennzeichnet, dass** zumindest ein Umpolschalter (124, 126) vorgesehen ist, der mit der Motorsteuerung (20) gekoppelt ist, um abhängig von einem Betriebszustand des Elektrowerkzeugs (10) selektiv das Umpolen des zumindest einen Spulenabschnitts (112) der Spulenstränge (106) zu bewirken.

11. Elektrowerkzeug (10) nach Anspruch 9 oder 10, **dadurch gekennzeichnet, dass** der zumindest eine Umpolschalter (124, 126) mit einem Wählschalter (56) zum selektiven Umpolen des zumindest einen Spulenabschnitts (112) der Spulenstränge (106) gekoppelt ist.

12. Elektrowerkzeug (10) nach einem der Ansprüche 9 bis 11, **gekennzeichnet durch** ein Getriebe (30) zur Untersetzung oder Übersetzung eines Abtriebsmoments oder einer Abtriebsdrehzahl, und **durch** eine Steuereinrichtung (102), die dazu ausgebildet ist, zumindest eine einen Betriebszustand charakterisierende Kenngröße zu erfassen, wobei vorzugsweise die Steuereinrichtung (102) der Motorsteuerung (20) zugeordnet oder mit dieser gekoppelt ist.

13. Elektrowerkzeug (10) nach einem der Ansprüche 9 bis 12, **gekennzeichnet durch** eine Energieversorgungseinrichtung (42) zur Bereitstellung elektrischer Energie, die vorzugsweise mit einer Gleichstromquelle, weiter bevorzugt mit einem Akkumulator (44) koppelbar ist.

**Claims**

1. An electrical drive, in particular for an electrical power tool (10) having a motor (18) with a rotor (90) and a stationary stator (104), which has a coil arrangement, and having a motor controller (20) for controlling the motor (18), with the motor controller (20) being configured to pass current through the coil arrangement in order to produce an excitation field, with the coil arrangement having a plurality of coil winding sections (106), and with each coil winding section (106) having a plurality of coil sections (110, 112, 114), **characterized in that** the polarity of at least one coil section (112, 114) of the plurality of coil sections (110, 112, 114) of each coil winding section (106) can be selectively reversed with respect to the other coil sections (110) of the coil winding section (106).

2. The drive (16) according to Claim 1, **characterized in that** the motor controller (20) is configured to operate the motor (18) with a first rotation speed/torque characteristic and with a second rotation speed/torque characteristic, whose gradient is different from that of the first rotation speed/torque characteristic, wherein the power output preferably is substantially unchanged when the relative load is the same.

3. The drive (16) according to Claim 1 or 2, **characterized by** at least one polarity reversing switch (124, 126), which is configured to switch the plurality of coil sections (110, 112, 114) of a coil winding section (106) between a first state, in which all the coil sections (110, 112, 114) in the coil winding section (106) have the same polarity, and a second state, in which at least one coil section (112, 114) of the plurality of coil sections (110, 112, 114) in the coil winding section (106) has opposite polarity to the other coil sections (110) in the coil winding section (106).

4. The drive (16) according to one of the preceding claims, **characterized in that** at least one coil winding section (106) has a first coil section (110) and at least one second coil section (112), **in that** the first coil section (110) has a first number of turns $(n_1)$, and the second coil section (112) has a second number of turns $(n_2)$, and **in that**, when the motor controller (20) causes current to flow, magnetic fields are produced which are coupled to the coil sections (110, 112) and produce a sum field (138) when the first coil section (110) and the second coil section (112) have the same polarity, and which produce a difference field (140) when the second coil section (112) has an opposite polarity to the first coil section (110).

5. The drive (16) according to Claim 4, **characterized in that** the polarity of the second coil section (112) can be reversed, and **in that** the second coil section (112) has a second number of turns $(n_2)$ which is less than the first number of turns $(n_1)$.

6. The drive (16) according to Claim 4, **characterized in that** the polarity of the second coil section (112) can be reversed, and **in that** the second coil section (112) has a second number of turns $(n_2)$ which is greater than the first number of turns $(n_1)$.

7. The drive (16) according to one of Claims 4 to 6 **characterized in that** the difference field (140) is weaker than the sum field (138), as well as the associated induced voltages, substantially by a factor ($i = n_1 + n_2/n_1 - n_2$) .

8. The drive (16) according to one of the preceding claims, **characterized in that** the motor (18) is a motor which has permanent magnet excitation and can be commutated electronically.

9. An electrical power tool, **characterized by** a drive (16) according to one of the preceding claims, which can be coupled to a tool spindle (23) in order to drive a tool (24).

10. The electrical power tool (10) according to Claim 9, **characterized in that** at least one polarity reversing switch (124, 126) is provided and is coupled to the motor controller (20), in order to selectively reverse the polarity of the at least one coil section (112) in the coil winding sections (106), depending on an operating state of the electrical tool (10).

11. The electrical power tool (10) according to Claim 9 or 10, **characterized in that** the at least one polarity reversing switch (124, 126) is coupled to a selection switch (56) for selectively reversing the polarity of the at least one coil section (112) of the coil winding sections (106).

12. The electrical power tool (10) according to one of the Claims 9 to 11, **characterized by** a gearbox (30) for stepping down or stepping up an output drive torque or an output drive rotation speed, and by a control device (102) which is designed to detect at least one characteristic variable which characterizes an operating state, with the control device (102) preferably being associated with the motor controller (20), or being coupled to it.

**13.** The electrical power tool (10) according to one of the Claims 9 to 12, **characterized by** a power supply device (42) for providing electrical power, which can preferably be coupled to a direct-current source, furthermore preferably to a rechargeable battery (44).

## Revendications

**1.** Mécanisme d'entraînement électrique, notamment pour un outil électrique (10), comprenant un moteur (18) doté d'un rotor (90) et d'un stator fixe (104), lequel présente un arrangement de bobine, et comprenant une commande de moteur (20) pour commander le moteur (18), la commande de moteur (20) étant configurée pour alimenter électriquement l'arrangement de bobine en vue de générer un champ excitateur, l'arrangement de bobine présentant une pluralité de branches de bobine (106) et chaque branche de bobine (106) présentant une pluralité de portions de bobine (110, 112, 114), **caractérisé en ce que** la polarité d'au moins une portion de bobine (112, 114) de la pluralité de portions de bobine (110, 112, 114) de chaque branche de bobine (106) peut être inversée de manière sélective par rapport aux autres portions de bobine (110) de la branche de bobine (106).

**2.** Mécanisme d'entraînement (16) selon la revendication 1, **caractérisé en ce que** la commande de moteur (20) est configurée pour faire fonctionner le moteur (18) avec une première courbe caractéristique vitesse de rotation/couple et avec une deuxième courbe caractéristique vitesse de rotation/couple, laquelle présente une pente différente de celle de la première courbe caractéristique vitesse de rotation/couple, la puissance délivrée pour une même charge relative étant de préférence pour l'essentiel inchangée.

**3.** Mécanisme d'entraînement (16) selon la revendication 1 ou 2, **caractérisé par** au moins un inverseur de polarité (124, 126) qui est configuré pour permuter la pluralité de portions de bobine (110, 112, 114) d'une branche de bobine (106) entre un premier état, dans lequel toutes les portions de bobine (110, 112, 114) de la branche de bobine (106) présentent une même polarité, et un deuxième état, dans lequel au moins une portion de bobine (112, 114) de la pluralité de portions de bobine (110, 112, 114) de la branche de bobine (106) présente une polarité inverse de celle des autres portions de bobine (110) de la branche de bobine (106).

**4.** Mécanisme d'entraînement (16) selon l'une des revendications précédentes, **caractérisé en ce qu'**au moins une branche de bobine (106) présente une première portion de bobine (110) et au moins une deuxième portion de bobine (112), **en ce que** la première portion de bobine (110) présente un premier nombre de spires ($n_1$) et la deuxième portion de bobine (112) présente un deuxième nombre de spires ($n_2$), et **en ce que** lors de l'alimentation électrique par la commande de moteur (20), il se produit avec les portions de bobine (110, 112) des champs magnétiques couplés qui provoquent un champ additionnel (138) lorsque la première portion de bobine (110) et la deuxième portion de bobine (112) ont la même polarité et un champ différentiel (140) lorsque la deuxième portion de bobine (112) présente une polarité inverse de celle de la première portion de bobine (110).

**5.** Mécanisme d'entraînement (16) selon la revendication 4, **caractérisé en ce que** la polarité de la deuxième portion de bobine (112) peut être inversée et **en ce que** la deuxième portion de bobine (112) présente un deuxième nombre de spires ($n_2$) qui est inférieur au premier nombre de spires ($n_1$).

**6.** Mécanisme d'entraînement (16) selon la revendication 4, **caractérisé en ce que** la polarité de la deuxième portion de bobine (112) peut être inversée et **en ce que** la deuxième portion de bobine (112) présente un deuxième nombre de spires ($n_2$) qui est supérieur au premier nombre de spires ($n_1$).

**7.** Mécanisme d'entraînement (16) selon l'une des revendications 4 à 6, **caractérisé en ce que** le champ différentiel (140) est affaibli par rapport au champ additionnel (138), ainsi que les tensions induites associées, pour l'essentiel d'un facteur ($i = n_1 + n_2 / n_1 - n_2$).

**8.** Mécanisme d'entraînement (16) selon l'une des revendications précédentes, **caractérisé en ce que** le moteur (18) est réalisé sous la forme d'un moteur à commutation électronique à excitateur permanent.

**9.** Outil électrique, **caractérisé par** un mécanisme d'entraînement (16) selon l'une des revendications précédentes, lequel peut être accouplé à une broche d'outil (23) pour l'entraînement d'un outil (24).

**10.** Outil électrique (10) selon la revendication 9, **caractérisé en ce qu'**il est prévu au moins un inverseur de polarité (124, 126) qui est connecté avec la commande de moteur (20) pour effectuer une inversion sélective de la polarité de l'au moins une portion de bobine (112) des branches de bobine (106) en fonction d'une situation de fonctionnement de l'outil électrique (10).

**11.** Outil électrique (10) selon la revendication 9 ou 10, **caractérisé en ce que** l'au moins un inverseur de polarité (124, 126) est connecté avec un sélecteur (56) pour effectuer l'inversion sélective de la polarité de l'au moins une portion de bobine (112) des branches de bobine (106).

**12.** Outil électrique (10) selon l'une des revendications 9 à 11, **caractérisé par** un engrenage (30) pour démultiplier ou surmultiplier un couple d'entraînement ou une vitesse de rotation d'entraînement, et par un dispositif de commande (102) qui est configuré pour détecter au moins une grandeur qui caractérise une situation de fonctionnement, le dispositif de commande (102) étant de préférence associé à la commande de moteur (20) ou connecté avec celle-ci.

**13.** Outil électrique (10) selon l'une des revendications 9 à 12, **caractérisé par** un dispositif d'alimentation en énergie (42) pour délivrer de l'énergie électrique, lequel peut être accouplé de préférence à une source de courant continu, plus préférablement avec un accumulateur (44).

Fig.1

Fig.2

Fig.3

Fig.4

Fig.5a

Fig.5b

Fig.5c

Fig.5d

Fig.2a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007040725 A1